# EUROPÄISCHE PATENTANMELDUNG

(11) **EP 2 799 685 A2**
(43) Veröffentlichungstag der Anmeldung: **05.11.2014**
(21) Anmeldenummer: 14165738.7
(22) Anmeldetag: 24.04.2014
(51) Int. Cl.: F01P 7/14

(54) **Elektrisch antreibbares Ventil zur Regelung von Volumenströmen in einem Heiz- und/oder Kühlsystem eines Kraftfahrzeuges**

(30) Priorität: 03.05.2013 DE 102013208193
(71) Anmelder: Behr Thermot-tronik GmbH, 70806 Kornwestheim (DE)
(72) Erfinder: Klein, Dr. Hans-Peter, 71397 Leutenbach (DE)
(74) Vertreter: Grauel, Andreas

(57) **Zusammenfassung**

Die Erfindung betrifft ein Elektrisch antreibbares Ventil für eine Regelung von Volumenströmen in einem Heiz- und/oder Kühlsystem eines Kraftfahrzeuges mit einem Gehäuse, an dem mindestens zwei Anschlussstutzen ausgebildet sind, wobei je nach Anordnung des Ventils in einem Heinz- und/oder Kühlkreislauf ein oder mehrere Anschlussstutzen als Anströmanschlüsse und ein Anschlussstutzen als Abströmanschluss oder ein oder mehrere Anschlussstutzen als Abströmanschlüsse und ein Anschlussstutzen als Anströmanschluss ausgebildet sind, wobei in dem Gehäuse ein, um eine Drehachse (DA) drehbarer Ventilkörper (6) angeordnet ist. Bei einem elektrisch steuerbaren Ventil, bei welchem Druckverluste im Regelkreislauf zuverlässig reduziert werden, sind bei axialer Anströmung oder Abströmung des Ventils durch ein Heiz- und/oder Kühlmittel die Achsen (A) von einem oder mehreren Abströmanschlüssen oder von einem oder mehreren Anströmanschlüssen axial und radial in Bezug auf die Drehachse (DA) des Ventilkörpers (6) ausgerichtet.

## Beschreibung

### Technisches Gebiet

Die Erfindung betrifft ein elektrisch antreibbares Ventil für eine Regelung von Volumenströmen in einem Heiz- und/oder Kühlsystem eines Kraftfahrzeuges nach dem Oberbegriff von Anspruch 1.

### Stand der Technik

In heutigen Kraftfahrzeugen spielt das Thermo-Management in einem Kühlsystem eine große Rolle, insbesondere im Hinblick auf eine Verbrauchsreduktion, eine Einsparung von CO₂-Emissionen und eine Komforterhöhung. Dabei werden je nach thermischer Anforderung Fluidströme geschaltet bzw. geregelt, so z.B. beim Kühlmittelstillstand im Warmlauf oder je nach Lastbedingungen der Brennkraftmaschine. Zum Schalten und Regeln der Fluidströme werden elektrisch antreibbare Ventile der unterschiedlichsten Bauarten eingesetzt.

Aus der DE 10 2006 053 310 A1 ist ein Ventil mit einem scheibenförmigen Ventilkörper bekannt, das eine drehwinkelabhängige Öffnungscharakteristik zum Regeln des Volumens der Fluidströme aufweist. Die An- und Abströmung des Kühlmittels erfolgt hierbei axial zur Drehachse.

Aus der EP 0 639 736 ist ein Drehventil bekannt, bei dem die An- und Abströmung des Kühlmittels dagegen radial zur Drehachse erfolgt. Dabei wird die Außenkontur des Ventilkörpers für eine drehwinkelabhängige Öffnungscharakteristik genutzt.

Die EP 1 108 867 A2 weist ein Ventilkörper mit mehreren Durchbohrungen auf, wobei der Ventilkörper auch zur Mantelfläche hin offen gestaltet ist.

Aus der DE 198 49 492 A1 ist wiederum ein Drehventil bekannt, bei welchem die Anströmung axial und die Abströmungen des Kühlmittels radial erfolgen oder umgekehrt.

Die verschiedenen Ventile besitzen dabei zylinderförmige oder kugelförmige Ventilkörper, die durch ihre Außenkontur oder durch ihre Innenkontur (Bohrungen, Öffnungen) die Volumenströme des Fluids regeln.

Je nach Konstruktion des Ventils treten Druckverluste innerhalb des Regelkreislaufes auf.

### Darstellung der Erfindung, Aufgabe, Lösung, Vorteile

Es ist die Aufgabe der Erfindung, ein elektrisch antreibbares Ventil für eine Regelung von Volumenströmen in einem Heiz- und/oder Kühlsystem eines Kraftfahrzeuges zu schaffen, welches eine zuverlässige Reduzierung der Druckverluste im Regelkreislauf gewährleistet.

Dies wird erreicht mit den Merkmalen von Anspruch 1, wonach bei axialer Anströmung oder Abströmung des Ventils durch ein Heiz- und/oder Kühlmittel die Achsen von einem oder mehreren Abströmanschlüssen oder von einem oder mehreren Anströmanschlüssen axial und radial in Bezug auf die Drehachse des Ventilkörpers ausgerichtet sind. Durch diese Ausgestaltung wird eine Druckverlustreduzierung gegenüber Ventilen mit radialer An- und Abströmung bzw. mit axialer Anströmung und einer oder mehreren radialen Abströmungen erzielt. Gleichzeitig ist eine bessere Kleinstmengenregelung möglich.

In einer Weiterbildung sind eine Achse eines Abströmanschlusses oder eines Anströmanschlusses die Drehachse ist, welche in einer ersten Ebene liegt, und die jeweils andere Achse in einer zweiten Ebene verläuft, wobei die zweite Ebene gegenüber der ersten Ebene um die Drehachse um einen ersten Winkel a gedreht ist, und wobei die jeweils andere Achse gegenüber der Drehachse um einen Winkel b geneigt ist, wobei a vorzugsweise zwischen 15° und 165° sowie b vorzugsweise zwischen 15° und 75° beträgt. Die Verwendung eines solchen Ventils reduziert den Druckverlust innerhalb des Regelkreislaufes.

In einer Ausgestaltung weisen die Achsen des Abströmanschlusses oder die Achse des Anströmanschlusses und/oder die Drehachse des Ventilkörpers keinen gemeinsamen Schnittpunkt auf. Vorteilhafterweise dabei ist, dass sich die Achsen der einzelnen Anschlüsse jede für sich unterschiedliche erste und zweite Winkel aufweisen können.

In einer Variante sind die Achse eines oder mehrerer Anströmanschlüsse zwischen einer axialen oder radialen Ausrichtung und die Achse des Abströmanschlusses radial zur Drehachse des Ventilkörpers ausgebildet oder die Achse eines oder mehrerer Abströmanschlüsse zwischen einer axialen oder radialen Ausrichtung und die Achse des Anströmanschlusses radial zur Drehachse des Ventilkörpers ausgebildet.

Alternativ sind die Achsen der Anströmanschlüsse und des Abströmabschlusses oder die Achsen der Abströmanschlüsse und des Anströmanschlusses zwischen einer axialen oder radialen Ausrichtung angeordnet.

In einer weiteren Alternative ist die Achse eines Anströmanschlusses und die Achse des Abströmanschlusses axial zur Drehachse des Ventilkörpers und die Achse der weiteren Anströmanschlüsse radial zur Drehachse des Ventilkörpers ausgebildet oder die Achse eines Abströmanschlusses und die Achse des Anströmanschlusses axial zur Drehachse und die Achse der weiteren Abströmanschlüsse radial zur Drehachse des Ventilkörpers angeordnet. Die konstruktiv unterschiedlichen Ausgestaltungen der Anschlüsse ergeben eine Vielzahl von Möglichkeiten für eine Druckverlustreduzierung im Regelkreislauf,

In einer Variante ist der Ventilkörper gegenüber der Drehachse schwenkend veränderlich. Dadurch, dass je nach Vorgabe eines Steuergeräts der Ventilkörper seinen Drehwinkel schwenkend verändert, wird nur ein kleiner Bauraum für den Ventilkörper benötigt, wodurch auch die Größe des Ventils reduziert werden kann. Mittels dieser schwenkenden Bewegung lässt sich der Ventilkörper für eine Vielzahl von Gehäusekonstruktionen des Ventils mit unterschiedlich angeordneten An- und Abströmanschlüssen verwenden.

Vorteilhafterweise ist der Ventilkörper halbkugelähnlich oder kugelsegmentähnlich ausgebildet. Solche Ventilkörper sind einfach innerhalb des Ventils bewegbar und lassen sich in jede Stellung bringen, um die gewünschten An- bzw. Abströmstutzen des Ventils zu öffnen oder zu schließen. Bei einem solchen halbkugelähnlichen Ventilkörper geht die Drehachse durch den Scheitelpunkt des Ventilkörpers. Es ist aber auch alternativ vorstellbar, dass die Drehachse einen Winkel zum Scheitelpunkt vorzugsweise bis zu 30° besitzt.

Ein so ausgebildetes Ventil ist dabei in dem Heiz- und/oder Kühlmittelkreislauf sowohl als Eintrittsregler für das Kühlmittel zum Verbrennungsmotor oder auch als Austrittsregler des erwärmten Fluids aus dem Verbrennungsmotor möglich.

In einer Ausführungsform nimmt der Ventilkörper wenigstens zwei Schaltzustände an. Diese Schaltzustände realisieren dabei einen offenen oder einen geschlossenen Abström- oder Anströmanschluss. Durch eine solche Ansteuerung des elektromotorisch betätigten Ventilkörpers wird eine sehr einfache Regelung des Kühlmittels eingestellt.

Eine wesentlich feinere Regelung des Kühlmittels ist möglich, wenn der Ventilkörper, vorzugsweise stufenlos, eine Mehrzahl von Schaltzuständen einnimmt. Dabei werden beliebige Zwischenzustände zwischen dem offenen und dem geschlossenen Zustand eines Abström- oder Anströmanschlusses eingestellt.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1a bis 1d: mehrere Ausführungsbeispiele für die An-/Abströmung des Fluids bei einem kugelsegmentartig ausgebildeten Ventilkörper des Ventils,
- Fig. 2a bis 2c: eine Prinzipdarstellung der möglichen Anordnungen der An- bzw. Abströmstutzen des Ventils gemäß Fig. 1,
- Fig. 3a bis 3f: Beispiele für das An-/Abströmen des Kühlmittels am Beispiel des Ventils gemäß Fig. 1,

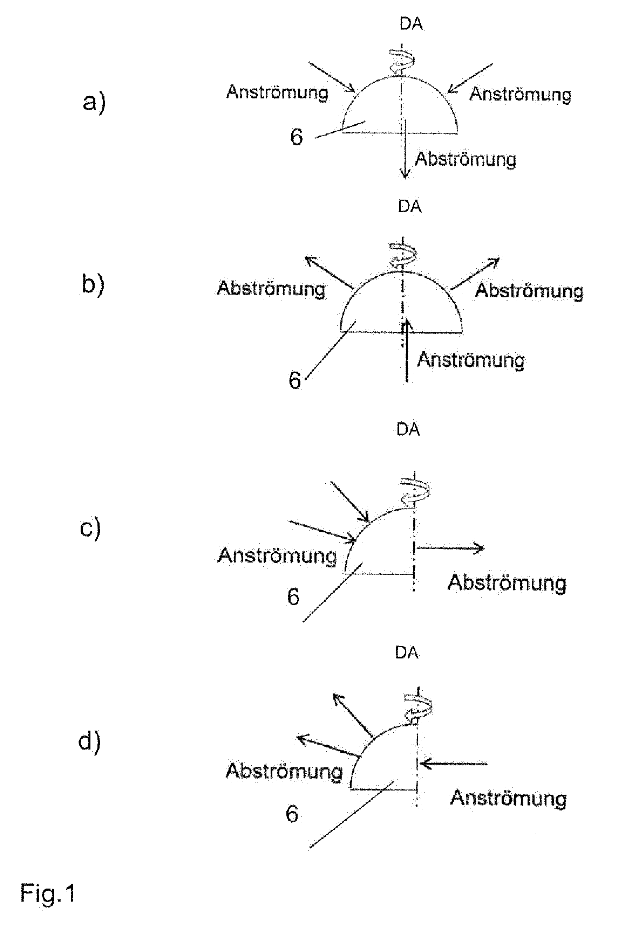

In Fig. 1 a und 1 b sind die An-/Abströmungen an einem halbkugelförmig ausgebildeten Ventilkörper 6 schematisch dargestellt. In Fig. 1 a sind die Anschlussstutzen für die Anströmung relativ zur Drehachse DA des Ventilkörpers 6 zwischen einer axialen und radialen Ausrichtung angeordnet, während der für die Abströmung vorgesehene Anschlussstutzen axial zur Drehachse DA des Ventilkörpers ausgebildet ist. Diese Wirkungsweise wird bei einem Ventil als Eintrittsregler realisiert. Bei der Ausbildung des Ventils als Austrittsregler erfolgt eine axiale Anströmung durch den einen Anschlussstutzen, während die anderen Anschlussstutzen als Abströmstutzen ausgebildet sind, die ebenfalls zwischen einer axialen und einer radialen Ausrichtung zur Drehachse DA ausgebildet sind (Fig. 1b).

In Fig. 1c ist der Ventilkörper 6 als Kugelsegment, beispielsweise als eine Viertelhalbkugel, ausgebildet. Dabei befinden sich die zur Anströmung genutzten Anströmstutzen nebeneinander auf einer, dem viertelhalbkugelförmigen Kugelsegment des Ventilkörpers benachbarten Fläche des Gehäuses des Ventils, wobei die Achsen dieser Anschlussstutzen zwischen einer radialen und einer axialen Ausrichtung zur Drehachse DA ausgebildet sind. Die Abströmung, welche dabei durch den Anschlussstutzen erfolgt, erfolgt dabei radial zur Drehachse DA. Auch die hier dargestellte Ausgestaltung entspricht einem Eintrittsregler. Die Konstruktion bei einem als Austrittsregler eingesetzten Ventil ist in Fig. 1d verdeutlicht, wo ebenfalls die beiden zur Abströmung genutzten Anschlussstutzen mit ihren Achsen nebeneinander auf einer dem viertelhalbkugelförmigen Kugelsegment des Ventilkörpers 6 gegenüberliegenden Fläche des Gehäuses des Ventilsangeordnet sind und dabei eine Ausrichtung zwischen radial und axial zur Drehachse DA aufweisen. Radial zur Drehachse DA ist auf der entgegengesetzten Seite des Kugelsegments die Achse des Anschlussstutzens zur Anströmung angeordnet.

Der Ventilkörper 6 kann auf verschiedene Art und Weise gestaltet sein. Er kann eine oder mehrere Bohrungen aufweisen, durch welche der Volumenstrom des durch das Ventil strömenden Fluids geregelt wird. Anstelle oder zusätzlich zu den Bohrungen können ein oder mehrere Aussparungen vorhanden sein. Der Ventilkörper 6 kann an seiner Stirnseite offen oder geschlossen ausgebildet sein und aus einem spritzfähigen Kunststoff hergestellt werden. An seiner Oberfläche, vorzugsweise an seiner Außenseite, weist der Ventilkörper 6 eine Schicht aus dichtendem Material auf. Diese Schicht wird von einer weiteren Schicht mit einem gleitfähigen und somit reibungsreduzierten Material überzogen. Alternativ dazu können an seiner Oberfläche eine oder mehrere Formdichtungen aufgebracht sein.

An der Oberfläche des Ventilkörpers 6 können Erhebungen oder den Ventilkörper 6 nicht durchdringende Aussparungen ausgebildet sein. Der Ventilkörper 6 ist dabei auf der vorzugsweise aus Stahl bestehenden Welle aufgespritzt, wobei die Welle Wellenenden aufweisen kann, die ebenfalls angespritzt sind. Alternativ besteht die Möglichkeit, dass eine zumindest teilweise durchgehende Welle vorhanden ist, auf welcher der Ventilkörper 6 axial verschiebbar aufgebracht ist. An der Welle kann sich eine Außenkontur oder eine Innenkontur befinden, die eine formschlüssige Verbindung zu einem elektrischen Antrieb darstellt.

Mittels federnder oder anderer mechanischer Mittel wird der Ventilkörper 6 unter Vorspannung gegen eine oder mehrere Öffnungen der Anschlussstutzen gebracht. Durch diese Vorspannung kann der Ventilkörper 6 eine Nachstellbewegung bei sich verschleißender Dichtung ausführen, um über die Lebensdauer des Ventils eine vorgeschriebene Leckage nicht zu überschreiten.

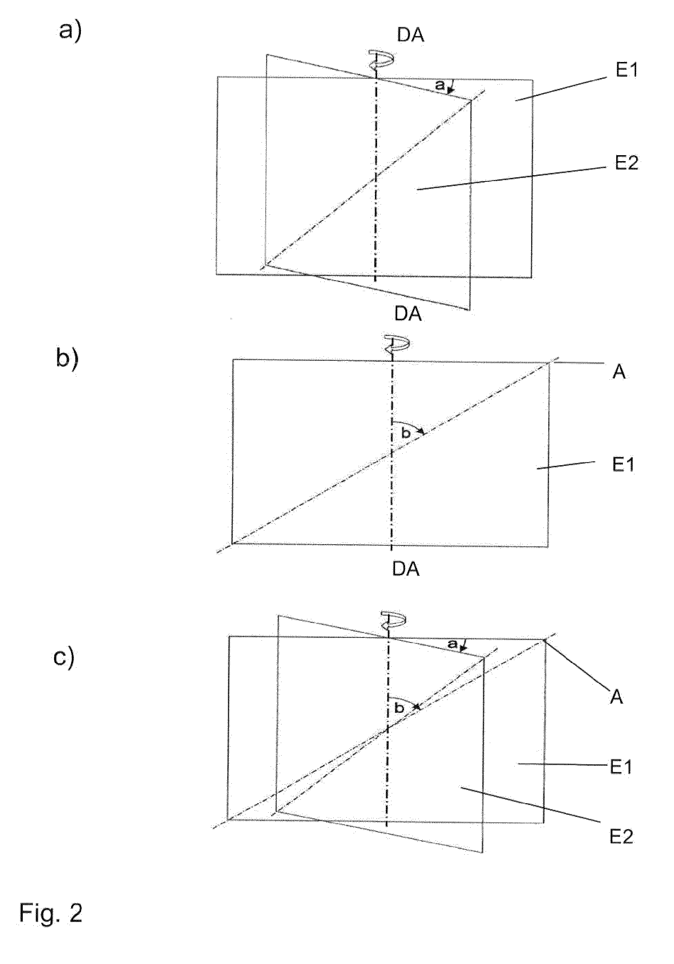

Gemäß Fig. 2b liegt die Achse A jedes als Anströmanschluss ausgebildeten Anschlussstutzens in einer ersten Ebene E1 unter einem Winkel b von 15° bis 75° zur Drehachse DA des Ventilkörpers 6 und in einer zweiten Ebene E2, die zur Ebene E1 unter einem zweiten Winkel a zwischen 15° und 165° steht (Fig. 2a). Die Achsen A der Anschlussstutzen können jede für sich unterschiedliche Winkel a und b aufweisen, wie es in Fig. 2c dargestellt ist. Sie müssen sich dabei nicht unbedingt mit der Drehachse DA bzw. untereinander schneiden.

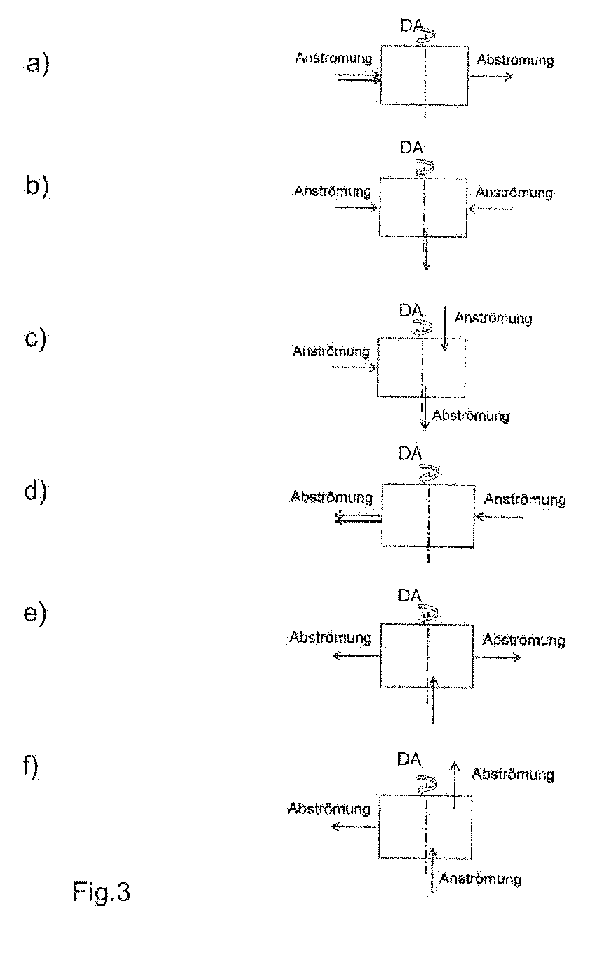

In Fig. 3 sind verschiedene Möglichkeiten der An- bzw. Abströmung am Beispiel eines Ventils mit drei Anschlussstutzen dargestellt. Dabei werden in Fig. 3a, 3b, 3c eine Abströmung und zwei Anströmungen betrachtet. Das Ventil ist als Eintrittsregler eingesetzt. Beim Vorhandensein von zwei Abströmungen und nur einer Anströmung des als Austrittsregler verwendeten Ventils, wie es in den Fig. 3d, 3e, 3f dargestellt ist, stellen sich vergleichbare Verhältnisse ein. Im Weiteren werden daher nur die Strömungsverhältnisse an dem Eintrittsregler betrachtet.

Gemäß Fig. 3a erfolgt die Anströmung des Ventils über die zwei Anschlussstutzen radial zur Drehachse DA, während die Abströmung des Ventils durch den Anschlussstutzen ebenfalls radial zur Drehachse DA erfolgt. Fig. 3b zeigt, dass eine Anströmung durch einen ersten Anschlussstutzen und eine zweite Anströmung durch den zweiten Anschlussstutzen jeweils radial zur Drehachse DA aber in entgegengesetzte Richtungen aufeinander zu erfolgt, während die Abströmung aus dem Ventil axial zur Drehachse DA durchgeführt wird. In Fig. 3c erfolgt eine Anströmung und eine Abströmung durch die Anschlussstutzen axial zur Drehachse, während eine Anströmung des Ventils durch den Anschlussstutzen radial zur Drehachse DA erfolgt.

## Patentansprüche

1. Elektrisch antreibbares Ventil für eine Regelung von Volumenströmen in einem Heiz- und/oder Kühlsystem eines Kraftfahrzeuges mit einem Gehäuse, an dem mindestens zwei Anschlussstutzen ausgebildet sind, wobei je nach Anordnung des Ventils in einem Heiz- und/oder Kühlkreislauf ein oder mehrere Anschlussstutzen als Anströmanschlüsse und ein Anschlussstutzen als Abströmanschluss oder ein oder mehrere Anschlussstutzen als Abströmanschlüsse und ein Anschlussstutzen als Anströmanschluss ausgebildet sind, wobei in dem Gehäuse ein, um eine Drehachse (DA) drehbarer Ventilkörper (6) angeordnet ist,
**dadurch gekennzeichnet, dass**
bei axialer Anströmung oder Abströmung des Ventils durch ein Heiz- und/oder Kühlmittel die Achsen (A) von einem oder mehreren Abströmanschlüssen oder von einem oder mehreren Anströmanschlüssen axial und radial in Bezug auf die Drehachse (DA) des Ventilkörpers (6) ausgerichtet sind.

2. Ventil nach Anspruch 1,
**dadurch gekennzeichnet, dass**
eine Achse eines Abströmanschlusses oder eines Anströmanschlusses die Drehachse (DA) ist, welche in einer ersten Ebene (E1) liegt, und die jeweils andere Achse in einer zweiten Ebene (E2) verläuft, wobei die zweite Ebene (E2) gegenüber der ersten Ebene (E1) um die Drehachse (DA) um einen ersten Winkel a gedreht ist, und wobei die jeweils andere Achse gegenüber der Drehachse (DA) um einen Winkel b geneigt ist, wobei a vorzugsweise zwischen 15° und 165° sowie b vorzugsweise zwischen 15° und 75° beträgt.

3. Ventil nach Anspruch 2,
**dadurch gekennzeichnet, dass**
die Achsen der Abströmanschlüsse und die Achse des Anströmanschlusses und/oder die Drehachse (DA) des Ventilkörpers (6) keinen gemeinsamen Schnittpunkt aufweisen.

4. Ventil nach Anspruch 1,
**dadurch gekennzeichnet, dass**
die Achse eines oder mehrerer Anströmanschlüsse zwischen einer axialen oder radialen Ausrichtung und die Achse des Abströmanschlusses radial zur Drehachse (DA) des Ventilkörpers (6) ausgebildet sind oder die Achse eines oder mehrerer Abströmanschlüsse zwischen einer axialen oder radialen Ausrichtung und die Achse des Anströmanschlusses radial zur Drehachse (DA) des Ventilkörpers (6) ausgebildet sind.

5. Ventil nach Anspruch 1,
**dadurch gekennzeichnet, dass**
die Achsen der Anströmanschlüsse und des Abströmanschlusses oder die Achse der Abströmanschlüsse und des Anströmanschlusses zwischen einer axialen oder radialen Ausrichtung angeordnet sind.

6. Ventil nach Anspruch 1,
**dadurch gekennzeichnet, dass**
die Achse eines Anströmanschlusses und die Achse des Abströmanschlusses axial zur Drehachse (DA) des Ventilkörpers und die Achse des weiteren Anströmanschlusses radial zur Drehachse (DA) des Ventilkörpers (6) ausgebildet ist, oder die Achse eines Abströmanschlusses und die Achse des Anströmanschlusses axial zur Drehachse (DA) und die Achse des weiteren Abströmanschlusses radial zur Drehachse (DA) des Ventilkörpers (6) ausgebildet ist.

7. Ventil nach wenigstens einem der vorhergehenden Ansprüche.
**dadurch gekennzeichnet, dass**
der Ventilkörper (6) gegenüber der Drehachse (DA) schwenkend veränderlich ist.

8. Ventil nach Anspruch 7,
**dadurch gekennzeichnet, dass**
der Ventilkörper (6) halbkugelförmig oder kugelsegmentähnlich ausgebildet ist.

9. Ventil nach einem der vorhergehenden Ansprüche,
**dadurch gekennzeichnet, dass**
der Ventilkörper (6) wenigstens zwei Schaltzustände einnimmt.

10. Ventil nach einem der vorhergehenden Ansprüche 1 bis 8,
**dadurch gekennzeichnet, dass**
der Ventilkörper (6), vorzugsweise stufenlos, eine Vielzahl von Schaltzuständen einnimmt.
